# EUROPÄISCHE PATENTANMELDUNG

(11) **EP 0 618 379 A1**
(43) Veröffentlichungstag der Anmeldung: **05.10.1994**
(21) Anmeldenummer: 94103982.8
(22) Anmeldetag: 15.03.1994
(51) Int. Cl.: F16F 1/37, F16B 5/06, F16B 19/10

(54) **Pufferelement zur schwingungsdämpfenden Auflage einer Grundplatte**

(30) Priorität: 02.04.1993 DE 4310848
(71) Anmelder: A. Raymond & Cie, F-38028 Grenoble-Cédex (FR)
(72) Erfinder: Bodo, Giuseppe, I-13100 Vercelli (IT)
(74) Vertreter: Kirchgaesser, Johannes, Dipl.-Ing.

(57) **Zusammenfassung**

Das vorliegende Pufferelement dient zur schwingungsdämpfenden Halterung einer mit Haltelöchern (5) versehenen Grundplatte (6), welche ein Antriebsaggregat trägt. Es besteht aus einem zylinderförmigen Stütztopf (1) mit einem zentral angeordneten Spreizniet (2) und einem in diesen eintreibbaren Stift (3) zur Verankerung des Topfes (1) im Loch einer Trägerplatte (12) sowie einer sich über den Topf (1) erhebenden, in die Haltelöcher (5) der Grundplatte (6) einführbaren Zentrierhülse(4).

Um das Pufferelement preisgünstig aus hartelastischem Kunststoff herstellen zu können, sind am oberen Rand (7) des Stütztopfes (1) mindestens zwei diametral gegenüberliegende Stützlappen (8) angeformt, welche schräg ansteigend nach innen gerichtet sind und im Abstand von der Zentrierhülse (4) enden. Um weiterhin einen sicheren Halt entgegen der Auflagerichtung zu gewährleisten, sind an der Zentrierhülse (4) oberhalb der Stützlappen (8) auf den Umfang gleichmäßig verteilt mindestens zwei etwa halbringförmig ausgebildete, schräg nach unten gerichtete Haltelappen (10) angeformt, deren äußerer Halterand (11) die inneren Stützkanten (9) der Stützlappen (8) überdecken.

## Beschreibung

Die Erfindung betrifft ein Pufferelement aus hartelastischem Kunststoff zur schwingungsdämpfenden Halterung einer mit Haltelöchern versehenen Grundplatte, welche ein Antriebsaggregat, wie z.B. den Kompressor eines Kühlschrankes, trägt.

Diese Art Antriebsaggregate unterliegen im Betriebszustand einer ständigen Vibration. Damit sich diese nicht auf das gesamte Gehäuse und damit auf die Umgebung überträgt, wird die mit dem Aggregat fest verbundene Grundplatte von den o.g. Pufferelementen getragen, welche ihrerseits auf einer Trägerplatte fest verankert sind.

Die der Erfindung zugrundeliegenden Pufferelemente bestehen im wesentlichen aus einem zylinderförmigen Stütztopf mit einem zentral angeordneten Spreizniet und einem in diesen eintreibbaren Stift zur Verankerung des Stütztopfes im Loch einer Trägerplatte. Über den Stütztopf erhebt sich eine Zentrierhülse, welche in entsprechend große Haltelöcher der Grundplatte einführbar ist.

Um den erfindungsgemäß angestrebten Dämpfungseffekt zu erreichen, wäre es naheliegend, Dämpfungsringe aus weichelastischem Gummi oder ähnlich wirkendem Kunststoffmaterial zu verwenden, welche um die Zentrierhülse auf den oberen Rand des Stütztopfes einfach aufzulegen wäre. Diese Lösung des Dämpfungsproblems ist jedoch unbefriedigend, weil sie nicht nur die Herstellungskosten des Pufferelementes verteuert, sondern auch noch die Gefahr in sich birgt, daß die Grundplatte - beispielsweise durch Schräglage des Gerätes beim Transport - aus den Zentrierhülsen herausspringt.

Aufgabe der Erfindung ist es daher, das vorgenannte Pufferelement so zu gestalten, daß es einstückig aus Kunststoff hergestellt werden kann und überdies sichergestellt ist, daß die aufgelegte Grundplatte entgegen der Auflagevorrichtung gehalten ist. Dies wird bei dem im Oberbegriff des Anspruchs 1 angegebenen Pufferelement dadurch erreicht, daß am oberen Rand des Stütztopfes mindestens zwei diametral gegenüberliegende Stützlappen angeformt sind, welche schräg ansteigend nach innen gerichtet sind und im Abstand von der Zentrierhülse enden, und daß an der Zentrierhülse oberhalb der Stützlappen, auf den Umfang gleichmäßig verteilt, mindestens zwei etwa halbringförmig ausgebildete, schräg nach unten gerichtete Haltelappen angeformt sind, deren äußerer Halterand den inneren Stützrand der Stützlappen überdecken.

Durch die vorgeschlagenen Maßnahmen wird auf einfache Weise erreicht, daß die Grundplatte mit den entsprechend ausgebildeten Haltelöchern sich leicht auf die Zentrierhülsen bis zur Auflage auf die Stützlappen aufdrücken läßt und von den Haltelappen, welche nach dem Durchtritt durch die Haltelöcher wieder auseinanderfedern, auf der Rückseite der Grundplatte gehalten werden.

Weitere vorteilhafte Ausgestaltungen der Erfindung ergeben sich aus den Merkmalen der Unteransprüche und sollen nachfolgend an Hand des in der Zeichnung dargestellten Ausführungsbeispiels der Erfindung näher erläutert werden. Es zeigt
- Fig. 1: das Pufferelement in einer Vorderansicht,
- Fig. 2: einen Längsschnitt durch das Pufferelement gemäß Linie II - II in Figur 1,
- Fig. 3: einen Querschnitt durch das Pufferelement mit Blick auf die Stützlappen gemäß Linie III - III in Figur 1,
- Fig. 4: einen Querschnitt durch das Pufferelement mit Blick auf die Haltelappen gemäß Linie IV - IV in Figur 1,
- Fig. 5: das auf einer Trägerplatte verankerte, noch unbelastete Pufferelement und
- Fig. 6: das verankerte Pufferelement mit aufgelegter Grundplatte.

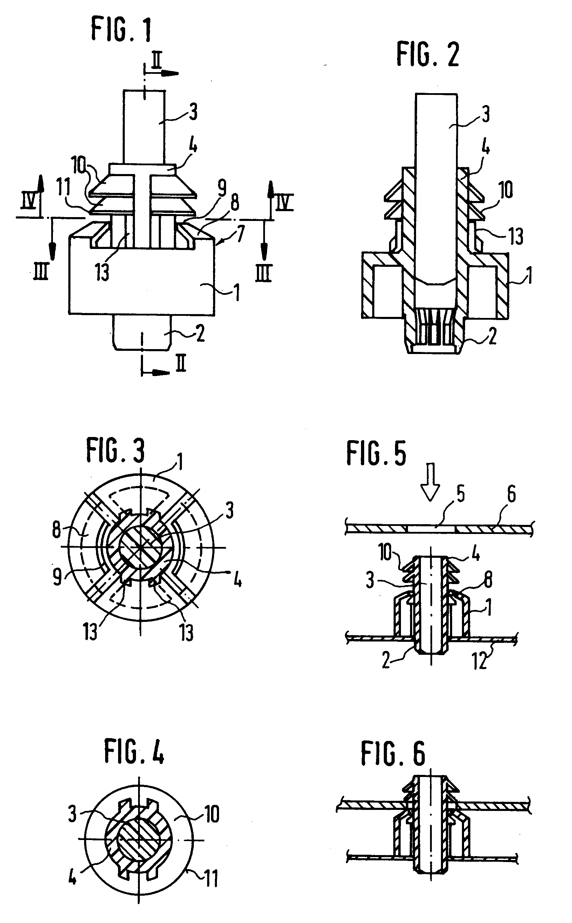

Das in den Figuren dargestellte Pufferelement besteht im wesentlichen aus einem zylinderförmigen Stütztopf 1 mit einem zentral angeordneten Spreizniet 2 und einem in diesen eintreibbaren Stift 3. Über dem Topf 1 erhebt sich eine Zentrierhülse 4, welche in Haltelöcher 5 einer Grundplatte 6 einführbar ist (Fig. 5 und 6).

Am oberen Rand 7 des Stütztopfes 1 sind zwei diametral gegenüberliegende Stützlappen 8 angeformt, welche schräg ansteigend nach innen gerichtet sind und in solchem Abstand von der Zentrierhülse 4 enden, daß die Stützkanten 9 dieser Stützlappen 8 an der Zentrierhülse 4 frei vorbeifedern können.

An der Zentrierhülse 4 sind oberhalb der Stützlappen 8 auf dem Umfang gleichmäßig verteilt zwei etwa halbringförmig ausgebildete, schräg nach unten gerichtete Haltelappen 10 angeformt, deren äußerer Halterand 11 die inneren Stützkanten 9 der Stützlappen 8 überdecken.

Der mit der Erfindung angestrebte Puffereffekt soll anhand der Figuren 5 und 6 erläutert werden, wobei das Pufferelement bei Figur 5 im montierten und bei Figur 6 im belasteten Zustand dargestellt ist. Der Stütztopf 1 ist in Figur 5 mittels des an der Unterseite hervorstehenden Spreizniets 2 nach Eindrücken des von oben eingeführten Stiftes 3 im Loch einer Trägerplatte 12 verankert. Die Grundplatte 6 befindet sich hierbei mit ihrem Halteloch 5 dicht über der Zentrierhülse 4.

Beim Aufdrücken in Pfeilrichtung dringen zunächst die Haltelappen 10 in das Halteloch 5 der Grundplatte 6 ein, welche zum Tragen eines in der Zeichnung nicht dargestellten Antriebsaggregats - wie beispielsweise eines Kompressors - bestimmt ist. Da der Durchmesser des äußeren Halterandes 11 größer ist als der lichte Durchmesser des Halteloches 5, werden die Haltelappen 10 elastisch zusammengedrückt, bis die Grundplatte 6 auf den Stützlappen 8 aufliegt und die Haltelappen 10 den Engpaß des Loches 5 passiert haben. Sodann federn die Haltelappen 10 wieder in ihre Ausgangslage zurück und legen sich von oben auf die Grundplatte 6 auf.

In dieser Lage können die von dem Antriebsaggregat erzeugten Schwingungen von den federelastischen Stützlappen 8 geschluckt werden, während die von oben aufliegenden Haltelappen 10 dafür sorgen, daß die Grundplatte 6 in ihrer Auflage gehalten wird.

Damit das Pufferelement auch für stärkere Grundplatten verwendbar ist, sind die Haltelappen 10 in zwei Höhenlagen vorgesehen. Da die Haltelappen aus Gründen der Elastizität eine bestimmte Breite benötigen, und da die Haltelöcher 5 sich am Durchmesser der Haltelappen 10 orientieren müssen und damit gegenüber den Zentrierhülsen 4 zuviel Spiel haben, sind an den Zentrierhülsen 4 im Bereich der Grundplattenhalterung zwischen den Stützlappen 8 und den Haltelappen 10 achsparallele Zentrierrippen 13 vorgesehen, welche die Haltelöcher 5 in ihrer Lage mit nur wenig Spiel festlegen.

## Patentansprüche

1. Pufferelement aus hartelastischem Kunststoff zur schwingungsdämpfenden Halterung einer ein Antriebsaggregat tragenden, mit Haltelöchern versehenen Grundplatte, bestehend aus einem zylinderförmigen Stütztopf mit einem zentral angeordneten Spreizniet und einem in diesen eintreibbaren Stift zur Verankerung des Topfes im Loch einer Trägerplatte sowie einer sich über den Topf erhebenden, in die Haltelöcher der Grundplatte einführbaren Zentrierhülse, **dadurch gekennzeichnet,** daß am oberen Rand (7) des Stütztopfes (1) mindestens zwei diametral gegenüberliegende Stützlappen (8) angeformt sind, welche schräg ansteigend nach innen gerichtet sind und im Abstand von der Zentrierhülse (4) enden, und daß an der Zentrierhülse (4) oberhalb der Stützlappen (8), auf den Umfang gleichmäßig verteilt, mindestens zwei etwa halbringförmig ausgebildete, schräg nach unten gerichtete Haltelappen (10) angeformt sind, deren äußerer Halterand (11) die inneren Stützkanten (9) der Stützlappen (8) überdecken.

2. Pufferelement nach Anspruch 1 dadurch gekennzeichnet, daß der Spreizniet (2) am unteren Ende aus dem Stütztopf (1) hervorsteht und mit der Zentrierhülse (4) so verbunden ist, daß der Spreizstift (3) durch die Zentrierhülse (4) in den Spreizniet (2) einführbar ist.

3. Pufferelement nach Anspruch 1 oder 2, dadurch gekennzeichnet, daß zwei Ringe von Haltelappen (10) übereinander angeordnet sind.
